# EUROPÄISCHE PATENTSCHRIFT

(11) **EP 0 995 250 B1**
(45) Veröffentlichungstag und Bekanntmachung des Hinweises auf die Patenterteilung: **18.09.2002**
(21) Anmeldenummer: 98930527.1
(22) Anmeldetag: 07.07.1998
(51) Int. Cl.: H02H 3/04

(54) **ÜBERWACHUNGSEINRICHTUNG FÜR ELEKTRISCHE SICHERUNGEN**
MONITORING DEVICE FOR ELECTRICAL FUSES
SYSTEME DE SURVEILLANCE POUR COUPE-CIRCUIT ELECTRIQUES

(30) Priorität: 15.07.1997 AT 120497
(43) Veröffentlichungstag der Anmeldung: 26.04.2000
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Weinzinger, Arnulf, Dipl.-Ing.
(86) Internationale Anmeldenummer: AT9800167
(87) Internationale Veröffentlichungsnummer: WO99004473

(56) Entgegenhaltungen:
- DE-C- 4 213 443

## Beschreibung

Die Erfindung betrifft eine Überwachungseinrichtung für Sicherungen, welche in Drehstrom-Versorgungsnetzen angeordnet sind, insbesondere für Niederspannungs-Hochleistungssicherungen, wobei die Einrichtung Phasensensoren zur Erfassung der Phasenlage der Spannung vor und nach jeder Sicherung aufweist, indem jeweils ein Phasensensor mit seinem einen Eingangsanschluß an die eine Seite und ein weiterer Phasensensor mit seinem einen Eingangsanschluß an die andere Seite einer zu überwachenden Sicherung angeschlossen ist, während der andere Eingangsanschluß der beiden Phasensensoren an einen Referenzpunkt angeschlossen ist, und wobei die Ausgangssignale der Phasensensoren einer Vergleichsstufe zugeführt werden, an welche eine Anzeigeeinrichtung angeschlossen ist.

Überwachungseinrichtungen für elektrische Sicherungen, bei denen zur Überwachung des Zustandes einer Sicherung beidseits der betreffenden Sicherung die dort vorliegende Spannung abgegriffen wird und einer Anzeige zugeführt wird, sind bekannt. Solche Überwachungseinrichtungen weisen z.B. zwei Glimmlampen auf, von denen die eine von einem vor der Sicherung liegenden Anschluß eines Phasenleiters nach Nullpotential geschaltet ist und die andere von einem nach der Sicherung liegenden Anschluß eines Phasenleiters nach Nullpotential geschaltet ist; eine Variante einer solchen Überwachungseinrichtung weist für jede zu überwachende Sicherung eine Glimmlampe auf, welche an eine Leitung beiderseits der zu überwachenden Sicherung angeschlossen ist und in einem Kurzschlußfall nach Ausfall der betreffenden Sicherung aufleuchtet.

Solche Einrichtungen arbeiten in mehrphasigen Wechselspannungsnetzen unzuverlässig, da in solchen Netzen nach Ausfall einer Sicherung durch Spannungsverkettungen an der Lastseite der ausgefallenen Sicherung Spannungen in nicht vorhersehbarer Größe auftreten können.

Dies trifft auch auf die Schaltung nach der DE 41 18 346 C1 zu, bei der zwischen den Sternpunkten des Netzes eine Serienschaltung eines Widerstandes und einer Diode angeschlossen ist, wobei der Spannungsabfall am Widerstand einem SchwellwertKomparator zugeführt wird. Bei dieser Schaltung findet kein Phasenvergleich statt.

Gemäß der DE 42 13 443 C1 ist schließlich eine Phasenvergleichsschaltung für Punkte vor und nach den zu überwachenden Sicherungen vorgesehen, welche ein Ausfallsignal abgibt, wenn eine Phasendifferenz zwischen den Punkten vor und nach einer Sicherung auftritt bzw. eine Phase fehlt. Vor den Sicherungen ist eine erste Dreieckschaltung und nach den Sicherungen ist eine zweite, gegenpolig zur ersten Dreickschaltung aufgebaute Dreieckschaltung angeordnet, wobei Komparatoren über Widerstands-Netzwerke bzw. antiparallel geschaltete Dioden angeschlossen sind, welche in den Zweigen der Dreieckschaltungen angeordnet sind, so daß Rechteckspannungen an den Dioden abfallen. Diese Rechteckspannungen schalten die Komparatoren beim Nulldurchgang um. Die Ausgangssignale der Komparatoren werden jeweils an dem einen Eingang von weiteren Komparatoren überlagert, die als Vergleichstufe dienen, während der andere Eingang dieser Komparatoren mit den Dreieckschaltungen verbunden ist. Ist die Sicherung intakt, so heben sich die überlagerten Ausgangssignale der Komparatoren am einen Eingang der weiteren Komparatoren gegenseitig auf, so daß keine Umschaltung dieser Komparatoren erfolgt. Beim Ausfall einer Sicherung schaltet der entsprechende Komparator um und gibt ein Signal an einen Schaltkreis zur Signalauswertung ab, der letztlich einen Relaiskreis aktiviert. Diese bekannte Überwachungseinrichtung ist somit ersichtlich aufwendig und dabei doch noch relativ unzuverlässig.

Es ist nun ein Ziel der Erfindung, eine Überwachungseinrichtung eingangs erwähnter Art zu schaffen, welche frei von Nachteilen vorgenannter Art ist und eine zuverlässige Überwachung von Sicherungen im Mehrphasen-Wechselstromversorgungsnetzen bei möglichst einfacher Bauweise ermöglicht.

Um diesem Ziel zu entsprechen, sieht die Erfindung eine Überwachungseinrichtung eingangs erwähnter Art vor, welche dadurch gekennzeichnet ist, daß die Phasensensoren mit ihren anderen Eingangsanschlüssen an den Nulleiter des Drehstrom-Versorgungsnetzes als Nullspannungs-Referenzpunkt angeschlossen sind, daß die Anzeigeeinrichtung ein Display und/oder ein mit einem Display versehener Rechner ist, an welchen eine Mehrzahl von Vergleichsstufen zur gleichzeitigen Überwachung einer Mehrzahl von Sicherungen angeschlossen ist, und daß die Phasensensoren Schwellenspannungsschaltungen sind, welche beim Durchgang des am Eingangsanschluß des jeweiligen Phasensensors anliegenden Wechselspannungswertes durch einen vorgewählten Vergleichsspannungswert ein Ausgangssignal abgeben. Diese Ausbildung einer Überwachungseinrichtung eingangs erwähnter Art kann baulich einfach realisiert werden und bietet eine gute Funktionssicherheit der Überwachung. Dabei stehen verschiedene einfach aufgebaute Schwellenspannungsschaltungen zur Verfügung, welche beim Erreichen eines bestimmten Spannungswertes der Eingangsspannung ein impulsförmiges Signal abgeben.

Eine besonders einfache Ausbildung der in der erfindungsgemäßen Einrichtung vorgesehenen Phasensensoren kann erhalten werden, wenn die Phasensensoren Nulldurchgangssignalgeber sind, welche ein Ausgangssignal bei einem in vorgewählter Richtung erfolgenden Nulldurchgang der am Eingangsanschluß anliegenden Wechselspannung abgeben. Es kann so eine sehr exakte Erfassung der Phasenlagen erreicht werden, weil die Steilheit der Spannungsänderung einer Wechselspannung im Nulldurchgang am größten ist. Nulldurchgangssignalgeber sind im Handel erhältlich.

Hinsichtlich des bei der erfindungsgemäß ausgebildeten Überwachungseinrichtung vorzunehmenden Vergleichs der zu beiden Seiten einer zu überwachenden Sicherung vorliegenden Phasenlagen der dort anliegenden Spannungen ist es auch vorteilhaft, wenn die Phasensensoren ein impulsförmiges Ausgangssignal vorgewählter Länge abgeben. Hierdurch kann auch eine gute Genauigkeit beim Phasenvergleich erzielt werden. Es ist dabei weiter eine einfache Ausbildung der Vergleichsstufe erzielbar, wenn die Vergleichsstufe ein UND-Gatter ist, dessen Eingängen die Ausgangssignale der beiden an die beiden Seiten einer zu überwachenden Sicherung angeschlossenen Phasensensoren zugeführt werden.

Es ist hier weiter auch günstig, eine Abhilfe gegen im Netz oft auftretende und nicht von den Phasensensoren stammende Störimpulse vorzusehen, und dies kann auf vorteilhafte Weise erreicht werden, wenn zwischen die Ausgänge der Phasensensoren und die Eingänge der Vergleichsstufe eine Siebeinrichtung zum Eliminieren von Störimpulsen eingefügt ist. Zum Erzielen einer besonders wirksamen Abhilfe gegen Störimpulse ist hier eine Ausführungsform vorteilhaft, welche dadurch gekennzeichnet ist, daß die Siebeinrichtung durch mehrere mit einem Eingangssignal zur Abgabe eines Ausgangsimpulses steuerbare Impulsgeber gebildet ist, welcher beim Einlangen eines Eingangssignals einen Impuls vorbestimmter Länge abgeben, wobei jedem dieser Impulsgeber zur Steuerung das Ausgangssignal eines Phasensensors zugeführt wird.

Die Erfindung wird nun anhand von Ausführungsbeispielen unter Bezugnahme auf die schematischen Zeichnungen weiter erläutert, in denen:
Fig.1 ein schematisches Schaltschema einer ersten Ausführungsform einer erfindungsgemäßen Überwachungseinrichtung darstellt;
Fig.2 ein schematisches Schaltschema einer Ausführungsform eines Phasensensors für eine solche Überwachungseinrichtung darstellt; und
Fig.3 ein Blockschaltbild einer weiteren Ausführungsform der erfindungsgemäßen Überwachungseinrichtung darstellt.

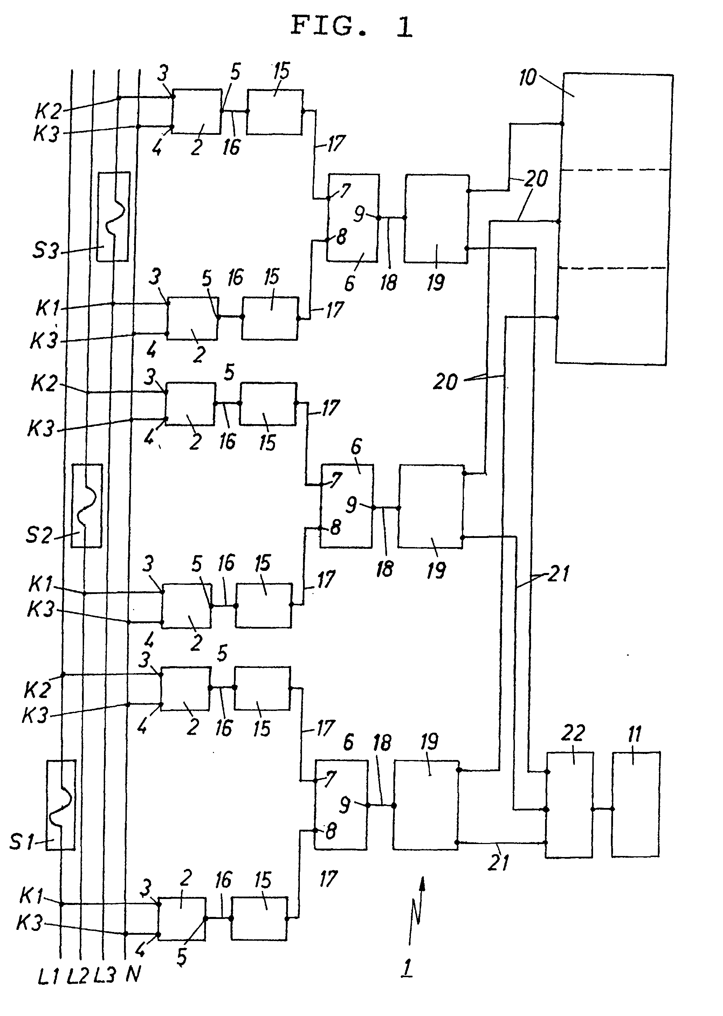

In Fig.1 ist eine Ausführungsform einer Überwachungseinrichtung 1 dargestellt, die zur Überwachung von elektrischen Sicherungen S1 S2, S3 in einem Mehrphasen-Wechselstromnetz L1, L2, L3 dient. Mit der Überwachungseinrichtung 1 wird festgestellt, ob an beiden Seiten der einzelnen Sicherungen S1, S2, S3 Netzwechselspannung mit gleicher Phasenlage vorliegt. Diese Überwachung erfolgt mit Phasensensoren 2, wobei jeweils ein Phasensensor 2 mit seinem Eingangsanschluß 3 an die eine Seite und ein weiterer Phasensensor 2 an die andere Seite der einzelnen zu überwachenden Sicherungen S1, S2 und S3 angeschlossen ist. Hierzu sind die Eingangsanschlüsse 3 mit Klemmen K1, K2, welche an den Phasenleitern L1, L2, L3 vor und nach den Sicherungen S1, S2, S3 vorgesehen sind, verbunden. Im dargestellten Fall werden dabei die gegenüber dem Nulleiter N vorliegenden Spannungen abgegriffen, indem der Bezugspotentialanschluß 4 der Phasensensoren 2 je mit einer Klemme K3 des Nulleiters N verbunden ist.

Die an den Ausgangsanschlüssen 5 der beiden je einer Sicherung S1, S2 bzw. S3 zugeordneten Phasensensoren 2 auftretenden Ausgangssignale, welche die Phasenlage der an den Eingangsanschlüssen 3 der betreffenden Phasensensoren 2 anliegenden Wechselspannungen ausdrücken, werden Eingängen 7, 8 einer Vergleichsstufe 6 zugeführt. Die Vergleichsstufe 6 vergleicht die ihren Eingängen 7, 8 zugeführten Ausgangssignale der Phasensensoren 2 miteinander und gibt an ihrem Ausgang 9 ein dem "Gut"-Zustand der von diesen Phasensensoren 2 überwachten Sicherung S1 S2 bzw. S3 ausdrückendes Signal ab, wenn die Ausgangssignale dieser Phasensensoren 2 eine gleiche Phasenlage der an den betreffenden Klemmen K1, K2 vorliegenden Wechselspannungen anzeigen. Zeigen die Ausgangssignale dieser Phasensensoren oder -detektoren 2 jedoch eine ungleiche Phasenlage der an den betreffenden Klemmen K1, K2 vorliegenden Wechselspannung an oder fehlt zufolge Nichtvorliegens einer Wechselspannung an einer der Klemmen K1, K2 ein solches Ausgangssignal, dann gibt die Vergleichsstufe 6 an ihrem Ausgang 9 ein den "Defekt"-Zustand der betreffenden Sicherung S1, S2 oder S3 ausdrückendes Signal ab. Gewünschtenfalls kann die Vergleichsstufe 6 auch zwei Ausgänge, nämlich einen Ausgang für das den "Gut"-Zustand ausdrückende Signal und einen anderen Ausgang für das den "Defekt"-Zustand ausdrückende Signal, aufweisen.

Die von der jeweiligen Vergleichsstufe 6 abgegebenen Signale werden einer Anzeigeeinrichtung 10 zugeführt, welche in Form eines Display ausgeführt sein kann, wo der Zustand der betreffenden Sicherung S1, S2 bzw. S3 angezeigt wird. Gleichzeitig werden diese Signale auch einem Rechner 11 zugeführt, welcher zur gleichzeitigen Überwachung einer Mehrzahl von Sicherungen dient, wobei diesem Rechner 11 die Signale einer Mehrzahl von Vergleichsstufen 6 zugeführt werden. Auch dieser Rechner 11 ist gewöhnlich mit einem Display versehen.

Die Phasensensoren 2 sind vorzugsweise in Form von Schwellenspannungsschaltungen ausgebildet, welche bei einem in vorgewählter Richtung erfolgenden Durchgang des am Eingangsanschluß des jeweiligen Phasensensors 2 anliegenden Wechselspannungswertes durch einen Vergleichsspannungswert ein Ausgangssignal abgeben. Eine solche Schwellenspannungsschaltung kann z.B. mit einem Widerstands-Kondensator-Glied, an das eine bei kleinen Spannungen sperrende und ab einem bestimmten Spannungswert leitend werdende Diode angeschaltet ist, realisiert werden. Mit einer solchen Schwellenspannungsschaltung kann man ein impulsförmiges Ausgangssignal erhalten, welches beim Erreichen des Vergleichsspannungswertes auftritt. Treten so die von den beiden miteinander hinsichtlich ihrer Phasenlage zu vergleichenden Wechselspannungen mittels der Phasensensoren 2 hergeleiteten Impulse gleichzeitig auf, haben diese beiden Wechselspannungen die gleiche Phasenlage, was anzeigt, daß der "Gut"-Zustand der betreffenden Sicherung vorliegt. Es ist besonders vorteilhaft, wenn die Schwellenspannungsschaltungen, welche als Phasensensoren 2 vorgesehen sind, Nulldurchgangssignalgeber sind, welche bei einem in vorgewählter Richtung erfolgenden Nulldurchgang der am Eingangsanschluß des betreffenden Phasensensors 2 anliegenden Wechselspannung ein Ausgangssignal abgeben, weil so die Signalabgabe weitestgehend unabhängig von der Amplitude der Wechselspannung ist und weil die Steilheit, mit der sich der Wert einer Wechselspannung ändert, beim Nulldurchgang am größten ist.

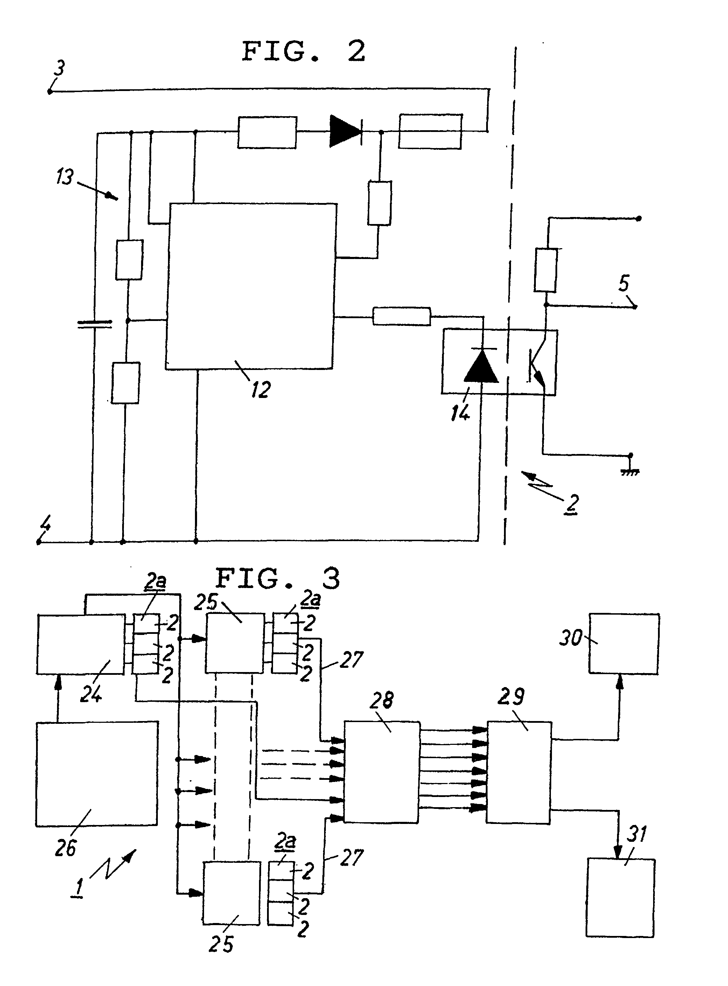

Die Schaltung eines als Nulldurchgangssignalgeber ausgebildeten Phasensensors 2 ist in Fig.2 dargestellt. Es ist dabei ein Nulldurchgangsschalter 12 mit einer äußeren Beschaltung 13 vorgesehen, die in an sich herkömmlicher Weise zur Speisespannungsversorgung und zur Einstellung der Signalparameter dient, wobei sich eine genauere Beschreibung erübrigen kann. Die an den Eingangsanschluß 3 und den Bezugsspannungsanschluß 4 anzulegende Wechselspannung, deren Phasenlage zu bestimmen ist, dient dabei gleichzeitig zur Speisespannungsversorgung des Phasensensors 2. Ausgangsseitig ist bei dem in Fig.2 dargestellten Phasensensor 2 ein Optokoppler 14 vorgesehen, der eine potentialmäßige Trennung des Ausganges 5, der mit Schaltkreisen, in denen eine Signalverarbeitung erfolgt, zu verbinden ist, von der an Netzspannung liegenden Eingangsseite 3, 4 des Phasensensors 2 schafft.

Die von den Ausgangsanschlüssen 5 der Phasensensoren 2 abgegebenen Ausgangssignale werden den Eingängen 7, 8 der Vergleichsstufe 6 vorzugsweise über Siebeinrichtungen 15 (s. Fig.1) zugeführt, welche zur Ausschaltung von Störimpulsen, wie sie in Wechselstromspeisenetzen oft auftreten, vorgesehen sind. Solche Siebeinrichtungen 15 können z.B. in Form von RC-Siebgliedern realisiert werden. Eine andere, bevorzugte Ausführungsmöglichkeit sieht vor, die Siebung durch Zeitfensterbildung zu realisieren, indem als Siebeinrichtung 15 ein steuerbarer Impulsgeber vorgesehen ist, welcher beim Einlangen eines vom zugehörigen Phasensensor 2 abgegebenen Ausgangssignals einen Impuls vorbestimmter Länge abgibt. Als Impulsgeber kann dabei vorteilhaft ein monostabiler Multivibrator, auch Monoflop genannt, vorgesehen werden. Beim Vergleich des Auftretens solcher von den Ausgangssignalen der Phasensensoren 2 ausgelöster Impulse vorbestimmter Länge kann man relativ einfach Störimpulse ausblenden, welche außerhalb jener Zeitabschnitte liegen, in denen die genannten Impulse vorbestimmter Länge auftreten.

Bei der in Fig.1 dargestellten Überwachungseinrichtung gelangen die von den Phasensensoren 2 abgegebenen Ausgangssignale über Leitungen 16 zu den Siebeinrichtungen 15 und weiter über Leitungen 17 zu den Eingängen 7, 8 der Vergleichsstufen 6. Die Vergleichsstufen 6 sind vorzugsweise UND-Gatter, wobei sich an deren Ausgang 9 beim gleichzeitigen Vorliegen von Signalen, die von den beiden jeweils zugehörigen Phasensensoren 2 herrühren, an den Eingängen 7, 8 dieser UND-Gatter ein den "Gut"-Zustand der mit diesen beiden Phasensensoren 2 überwachten Sicherung S1, S2 bzw. S3 anzeigendes Signal ergibt. Liegt keine Gleichzeitigkeit des Auftretens von Signalen an den Eingängen 7, 8 des UND-Gatters vor, so ergibt sich am Ausgang dieses UND-Gatters ein dem "Defekt"-Zustand der überwachten Sicherung S1, S2 bzw. S3 entsprechendes Ausgangssignal. Diese Ausführungsform der Vergleichsstufen 6 ist insbesondere dann vorteilhaft, wenn die deren Eingängen 7, 8 zugeführten Signale, welche von den Phasensensoren 2 geliefert oder durch die Ausgangssignale der Phasensensoren 2 ausgelöst werden, impulsförmig sind und eine vorbestimmte Länge haben.

Diese den "Gut"- und den "Defekt"-Zustand der Sicherungen S1, S2 bzw. S3 ausdrückenden Signale der Phasensensoren 2 werden über Leitungen 18 an Auswertstufen 19 weitergeleitet, von wo aus die Ansteuerung der über Leitungen 20 angeschlossenen Anzeigevorrichtung 10 (z.B. Display) erfolgt. Weiter ist an die Auswertstufen 19 über Leitungen 21 eine Schnittstelle 22 und an diese der Rechner 11 angeschlossen, der die Überwachung der Sicherungen S1 S2, S3 verwaltet und visualisiert.

Die in Fig.3 dargestellte Ausführungsform der Überwachungseinrichtung 1 ist zur Überwachung einer größeren Anzahl von Niederspannungs-Hochleistungssicherungen (NH-Sicherungen) einer elektrisch betriebenen Anlage vorgesehen. Es folgt dabei auf einen dreiphasigen Haupttrenner 24 eine größere Anzahl von gleichfalls dreiphasigen Untertrennern bzw. Nebentrennern 25. Der Haupttrenner 24 wird direkt von einer Transformatorstation 26 gespeist. Zur Überwachung der in dem Haupttrenner 24 und in den Nebentrennern 25 angeordneten Sicherungen (in Fig.3 nicht näher dargestellt) sind an diese Sicherungen, wie vorstehend erläutert, Phasensensoren 2 angeschlossen; die den einzelnen Trennern 24, 25 zugeordneten Gruppen 2a dieser Phasensensoren 2 sind über Leitungen 27 an einen Pegelanpaßstufe 28, welche z.B. mit Optokopplern aufgebaut sein kann, angeschlossen. Von der Pegelanpaßstufe 28 gelangen die Signale zu einer die Vergleichsstufen beinhaltenden Auswerteeinheit 29, an welche ein die Zustände der Sicherungen anzeigendes Display 30 und eine zum Anschluß eines Überwachungsrechners vorgesehene Schnittstelle 31 angeschlossen sind.

## Patentansprüche

1. Überwachungseinrichtung (1) für Sicherungen (S1, S2, S3), welche in Drehstrom-Versorgungsnetzen angeordnet sind, insbesondere für Niederspannungs-Hochleistungssicherungen, wobei die Einrichtung Phasensensoren (2) zur Erfassung der Phasenlage der Spannung vor und nach jeder Sicherung (S1, S2, S3) aufweist, indem jeweils ein Phasensensor (2) mit seinem einen Eingangsanschluß (3) an die eine Seite und ein weiterer Phasensensor (2) mit seinem einen Eingangsanschluß (3) an die andere Seite einer zu überwachenden Sicherung (S1, S2, S3) angeschlossen ist, während der andere Eingangsanschluß (4) der beiden Phasensensoren (2) an einen Referenzpunkt angeschlossen ist, und wobei die Ausgangssignale der Phasensensoren (2) einer Vergleichsstufe (6) zugeführt werden, an welche eine Anzeigeeinrichtung (10) angeschlossen ist, **dadurch gekennzeichnet, daß** die Phasensensoren (2) mit ihren anderen Eingangsanschlüssen an den Nulleiter (N) des Drehstrom-Versorgungsnetzes als Nullspannungs-Referenzpunkt angeschlossen sind, daß die Anzeigeeinrichtung ein Display (10) und/oder ein mit einem Display versehener Rechner (11) ist, an welchen eine Mehrzahl von Vergleichsstufen (29) zur gleichzeitigen Überwachung einer Mehrzahl von Sicherungen (24, 25) angeschlossen ist, und daß die Phasensensoren (2) Schwellenspannungsschaltungen sind, welche beim Durchgang des am Eingangsanschluß des jeweiligen Phasensensors (2) anliegenden Wechselspannungswertes durch einen vorgewählten Vergleichsspannungswert ein Ausgangssignal abgeben.

2. Überwachungseinrichtung nach Anspruch 1, **dadurch gekennzeichnet, daß** die Phasensensoren (2) Nulldurchgangssignalgeber (12, 13) sind, welche ein Ausgangssignal bei einem in vorgewählter Richtung erfolgenden Nulldurchgang der am Eingangsanschluß (3) anliegenden Wechselspannung abgeben.

3. Überwachungseinrichtung nach Anspruch 1 oder 2, **dadurch gekennzeichnet, daß** die Phasensensoren (2) ein impulsförmiges Ausgangssignal vorgewählter Länge abgeben.

4. Überwachungseinrichtung nach Anspruch 3, **dadurch gekennzeichnet, daß** die Vergleichsstufe (6) ein UND-Gatter ist, dessen Eingängen die Ausgangssignale der beiden an die beiden Seiten einer zu überwachenden Sicherung (S1, S2, S3) angeschlossenen Phasensensoren (2) zugeführt werden.

5. Überwachungseinrichtung nach Anspruch 3 oder 4, **dadurch gekennzeichnet, daß** zwischen die Ausgänge (16) der Phasensensoren (2) und die Eingänge (7, 8) der Vergleichsstufe (6) eine Siebeinrichtung (15) zum Eliminieren von Störimpulsen eingefügt ist.

6. Überwachungseinrichtung nach Anspruch 5, **dadurch gekennzeichnet, daß** die Siebeinrichtung (15) durch mehrere mit einem Eingangssignal zur Abgabe eines Ausgangsimpulses steuerbare Impulsgeber gebildet ist, welche beim Einlangen eines Eingangssignals einen Impuls vorbestimmter Länge abgeben, wobei jedem dieser Impulsgeber zur Steuerung das Ausgangssignal eines Phasensensors (2) zugeführt wird.

## Claims

1. A monitoring device (1) for fuses (S1, S2, S3) arranged in three-phase supply networks, in particular for low voltage HBC fuses, wherein the device includes phase sensors (2) for sensing the phase position of the voltage upstream and downstream of each fuse (S1, S2, S3), one respective phase sensor (2) being connected with one of its input terminals (3) to the one side, and a further phase sensor (2) with one of its input terminals (3) is connected to the other side of a fuse (S1, S2, S3) to be monitored, while the other input terminals (4) of the two phase sensors (2) are connected to a reference point, and wherein the output signals of the phase sensors (2) are supplied to a comparator stage (6) to which an indicating device (10) is connected, **characterised in that** the phase sensors (2) with their other input terminals are connected to the zero conductor (N) of the three-phase supply network as zero voltage reference point, that the indicating device is a display (10) and/or a computer (11) provided with a display, to which a plurality of comparator stages (29) is connected for the simultaneous monitoring of a plurality of fuses (24, 25), and that the phase sensors (2) are threshold voltage circuits which deliver an output signal when the alternating voltage value applied to the input terminal of the respective phase sensor (2) crosses a pre-selected comparative voltage value.

2. A monitoring device according to claim 1, **characterised in that** the phase sensors (2) are zero crossing signal generators (12, 13) generating an output signal at a zero crossing, occurring in the pre-selected direction, of the alternating voltage applied to the input connection (3).

3. A monitoring device according to claim 1 or 2, **characterised in that** the phase sensors (2) deliver a pulse-type output signal of a preselected length.

4. A monitoring device according to claim 3, **characterised in that** the comparator stage (6) is an AND gate, the output signals of the two phase sensors (2) connected to the two sides of a fuse (S1, S2, S3) to be monitored being supplied to the inputs of the AND gate.

5. A monitoring device according to claim 3 or 4, **characterised in that** a filtering device (15) for eliminating interference pulses is inserted between the outputs (16) of the phase sensors (2) and the inputs (7, 8) of the comparator stage (6).

6. A monitoring device according to claim 5, **characterised in that** the filtering device (15) is formed by several pulse generators controllable by an input signal for generating an output pulse, the pulse generators generating a pulse of a pre-determined length when an input signal arrives, the output signal of a phase sensor (2) being supplied to each of these pulse generators for control purposes.

## Revendications

1. Dispositif (1) de surveillance pour des fusibles (S1, S2, S3) qui sont, disposés dans des réseaux de distribution en courant rotatif en particulier pour des fusibles de forte puissance à basse tension, dans lequel le dispositif comprend des capteurs (2) de phase pour recueillir la phase de la tension avant et après chaque fusible (S1, S2, S3), dans lequel chaque capteur (2) de phase est relié par sa propre borne (3) d'entrée à un côté, et un autre capteur (2) de phase est relié par sa propre borne (3) d'entrée à l'autre côté d'un fusible (S1, S2, S3) à surveiller, tandis que l'autre borne (4) d'entrée des deux capteurs (2) de phase est reliée à un point de référence, et dans lequel les signaux de sortie des capteurs (2) de phase sont envoyés à un étage comparateur (6) auquel est raccordé un dispositif (10) d'affichage, **caractérisé en ce que** les capteurs (2) de phase sont reliés par leurs autres bornes d'entrée au conducteur de neutre (N) du réseau d'alimentation en courant rotatif comme point de référence de tension nulle, que le dispositif d'affichage est un afficheur (10) et/ou un calculateur muni d'un afficheur auquel sont raccordés une pluralité d'étages comparateurs (29) pour la surveillance simultanée d'une pluralité de fusibles (24, 25), et que les capteurs (2) de phase sont des circuits à tension de seuil qui, lors du franchissement par la valeur de tension alternative présente à la borne d'entrée du capteur correspondant (2) de phase d'une valeur prédéterminée de comparaison, délivrent un signal de sortie.

2. Dispositif de surveillance selon la revendication 1, **caractérisé en ce que** les capteurs (2) de phase sont des générateurs (12, 13) de signaux de passage par zéro qui délivrent un signal de sortie lors d'un passage, ayant lieu dans un sens prédéterminé, de la tension alternative présente à la borne (3) d'entrée.

3. Dispositif de surveillance selon la revendication 1 ou 2, **caractérisé en ce que** les capteurs (2) de phase délivrent un signal de sortie en forme d'impulsions de longueur prédéterminée.

4. Dispositif de surveillance selon la revendication 3, **caractérisé en ce que** l'étage comparateur (6) est une porte ET aux entrées desquelles sont envoyés les signaux de sortie des deux détecteurs (2) de phase reliés aux deux côtés d'un fusible (S1, S2, S3) à surveiller.

5. Dispositif de surveillance selon la revendication 3 ou 4, **caractérisé en ce qu'**entre les sorties (16) des détecteurs (2) de phase et les entrées (7, 8) des étages comparateurs (6) un dispositif (15) de filtrage est intercalé pour éliminer des impulsions parasites.

6. Dispositif de surveillance selon la revendication 5, **caractérisé en ce que** le dispositif (15) de filtrage est constitué de plusieurs générateurs d'impulsions commandables par un signal d'entrée pour délivrer une impulsion de sortie, qui lors de l'arrivée d'un signal d'entrée délivrent une impulsion de longueur prédéterminée, dans lequel à chacun de ces générateurs d'impulsions est envoyé le signal de sortie d'un détecteur (2) de phase pour le commander.
